# EUROPEAN PATENT APPLICATION

(11) **EP 4 697 760 A1**
(43) Date of publication of application: **18.02.2026**
(21) Application number: 23932377.7
(22) Date of filing: 10.04.2023
(51) Int. Cl.: H04W 4/029, H04W 64/00

(54) **LOCATION SERVICE ACQUISITION METHOD AND APPARATUS**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Gunzelmann, Rainer
(86) International application number: PCT/CN2023/087424
(87) International publication number: WO 2024/212077

(57) **Abstract**

Embodiments of the present application disclose a location service acquisition method and apparatus. The method comprises: sending a second request to a second network device on the basis of a received first request, wherein the first request comprises a first identifier of at least one terminal device, the second request is used for requesting the second network device to provide a second identifier corresponding to the first identifier of each terminal device in the at least one terminal device, and the second identifier corresponds to the first identifier; receiving the second identifier of the at least one terminal device sent by the second network device; and sending the second identifier of the at least one terminal device to a third network device and/or a fourth network device, wherein the second identifier of the at least one terminal device is used by the third network device and/or the fourth network device to provide a ranging or sidelink positioning service. It can be ensured that a gateway mobile location center can obtain an identifier of a terminal device that can be identified by a network element function, and send the identifier to a corresponding network element function to provide a ranging or sidelink positioning service.

## Description

### TECHNICAL FIELD

The present disclosure relates to the field of communication technology, and more specifically to a method and an apparatus for obtaining a position service.

### BACKGROUND

A ranging service refers to determining a relative distance between two user equipments (UEs) and/or determining a relative direction or angle of one UE relative to another UE. A sidelink (SL) positioning service enables the UE to use an SR5 (ranging/sidelink positioning interface)/PC5 (direct communication interface) link to obtain its absolute position, etc. The ranging/SL positioning service can be applied to various vertical fields such as consumption, smart home, smart city, smart transportation, smart retail and industry 4.0, etc.

### SUMMARY

According to a first aspect of embodiments of the present disclosure, a method for obtaining a position service is provided and performed by a first network equipment, including:
sending, based on a first request that is received, a second request to a second network equipment, in which the first request includes at least one first terminal identifier, and the second request is used to request the second network equipment to provide at least one second terminal identifier, in which the at least one second terminal identifier corresponds to the at least one first terminal identifier;
receiving the at least one second terminal identifier sent by the second network equipment; and
sending the at least one second identifier terminal to a third network equipment and/or a fourth network equipment, in which the at least one second terminal identifier is used for the third network equipment and/or the fourth network equipment to provide a ranging or sidelink (SL) positioning service.

According to a second aspect of the embodiments of the present disclosure, a method for obtaining a position service is provided and performed by a second network equipment, including:
receiving a second request sent by a first network equipment based on a first request that is received, in which the first request includes at least one first terminal identifier, and the second request is used to request the second network equipment to provide at least one second terminal identifier, in which the at least one second terminal identifier corresponds to the at least one first terminal identifier; and
sending the at least one second terminal identifier to the first network equipment, in which the at least one second terminal identifier is used for a third network equipment and/or a fourth network equipment to provide a ranging or sidelink (SL) positioning service.

According to a third aspect of the embodiments of the present disclosure, a method for obtaining a position service is provided and performed by a third network equipment, including:
receiving at least one second terminal identifier sent by a first network equipment, in which the at least one second terminal identifier is used for the third network equipment to provide a ranging or sidelink (SL) positioning service, the at least one second terminal identifier is obtained by the first network equipment from a second network equipment based on a first request that is received, in which the first request includes at least one first terminal identifier, and the at least one second terminal identifier corresponds to the at least one first terminal identifier.

According to a fourth aspect of the embodiments of the present disclosure, a method for obtaining a position service is provided and performed by a fourth network equipment, including:
receiving at least one second terminal identifier sent by a first network equipment, in which the at least one second terminal identifier is used for the fourth network equipment to provide a ranging or sidelink (SL) positioning service, the at least one second terminal identifier is obtained by the first network equipment from a second network equipment based on a first request that is received, in which the first request includes at least one first terminal identifier, and the at least one second terminal identifier corresponds to the at least one first terminal identifier.

According to a fifth aspect of the embodiments of the present disclosure, an apparatus for obtaining a position service is provided, and applied in a first network equipment, including a transceiver unit, configured to:
send, based on a first request that is received, a second request to a second network equipment, in which the first request includes at least one first terminal identifier, and the second request is used to request the second network equipment to provide at least one second terminal identifier, in which the at least one second terminal identifier corresponds to the at least one first terminal identifier;
receive the at least one second terminal identifier sent by the second network equipment; and
send the at least one second terminal identifier to a third network equipment and/or a fourth network equipment, in which the at least one second terminal identifier is used for the third network equipment and/or the fourth network equipment to provide a ranging or sidelink (SL) positioning service.

According to a sixth aspect of the embodiments of the present disclosure, an apparatus for obtaining a position service is provided, and applied in a second network equipment, including a transceiver unit, configured to:
receive a second request sent by a first network equipment based on a first request that is received, in which the first request includes at least one first terminal identifier, and the second request is used to request the second network equipment to provide at least one second terminal identifier, in which the at least one second terminal identifier corresponds to the at least one first terminal identifier; and
send the at least one second terminal identifier to the first network equipment, in which the at least one second terminal identifier is used for a third network equipment and/or a fourth network equipment to provide a ranging or sidelink (SL) positioning service.

According to a seventh aspect of the embodiments of the present disclosure, an apparatus for obtaining a position service is provided, and applied in a third network equipment, including a transceiver unit, configured to:
receive at least one second terminal identifier sent by a first network equipment, in which the at least one second terminal identifier is used for the third network equipment to provide a ranging or sidelink (SL) positioning service, the at least one second terminal identifier is obtained by the first network equipment from a second network equipment based on a first request that is received, in which the first request includes at least one first terminal identifier, and the at least one second terminal identifier corresponds to the at least one first terminal identifier.

According to an eighth aspect of the embodiments of the present disclosure, an apparatus for obtaining a position service is provided, and applied in a fourth network equipment, including a transceiver unit, configured to:
receive at least one second terminal identifier sent by a first network equipment, in which the at least one second terminal identifier is used for the fourth network equipment to provide a ranging or sidelink (SL) positioning service, the at least one second terminal identifier is obtained by the first network equipment from a second network equipment based on a first request that is received, in which the first request includes at least one first terminal identifier, and the at least one second terminal identifier corresponds to the at least one first terminal identifier.

According to a ninth aspect of the embodiments of the present disclosure, a communication apparatus is provided, including: a processor and a memory; in which the memory has a computer program stored thereon, the processor is configured to execute the computer program stored in the memory, to cause the communication apparatus to perform the method of the first aspect.

According to a tenth aspect of the embodiments of the present disclosure, a communication apparatus is provided, including: a processor and a memory; in which the memory has a computer program stored thereon, the processor is configured to execute the computer program stored in the memory, to cause the communication apparatus to perform the method of the second aspect.

According to an eleventh aspect of the embodiments of the present disclosure, a communication apparatus is provided, including: a processor and a memory; in which the memory has a computer program stored thereon, the processor is configured to execute the computer program stored in the memory, to cause the communication apparatus to perform the method of the third aspect or the fourth aspect.

According to a twelfth aspect of the embodiments of the present disclosure, a communication apparatus is provided, including: a processor and an interface circuit; in which the interface circuit is configured to receive code instructions and transmit the code instructions to the processor; the processor is configured to execute the code instructions to perform the method of the first aspect.

According to a thirteenth aspect of the embodiments of the present disclosure, a communication apparatus is provided, including: a processor and an interface circuit; in which the interface circuit is configured to receive code instructions and transmit the code instructions to the processor; the processor is configured to execute the code instructions to perform the method of the second aspect.

According to a fourteenth aspect of the embodiments of the present disclosure, a communication apparatus is provided, including: a processor and an interface circuit; in which the interface circuit is configured to receive code instructions and transmit the code instructions to the processor; the processor is configured to execute the code instructions to perform the method of the third aspect or the fourth aspect.

According to a fifteenth aspect of the embodiments of the present disclosure, a computer-readable storage medium is provided, on which instructions are stored. When the instructions are executed, the method of the first aspect is implemented.

According to a sixteenth aspect of the embodiments of the present disclosure, a computer-readable storage medium is provided, on which instructions are stored. When the instructions are executed, the method of the second aspect is implemented.

According to a seventeenth aspect of the embodiments of the present disclosure, a computer-readable storage medium is provided, on which instructions are stored. When the instructions are executed, the method of the third aspect or the fourth aspect is implemented.

According to an eighteenth aspect of the embodiments of the present disclosure, a computer program is provided. When the computer program is running on a computer, the computer is caused to perform the method of the first aspect.

According to a nineteenth aspect of the embodiments of the present disclosure, a computer program is provided. When the computer program is running on a computer, the computer is caused to perform the method of the second aspect.

According to a twentieth aspect of the embodiments of the present disclosure, a computer program is provided. When the computer program is running on a computer, the computer is caused to perform the method of the third aspect or the fourth aspect.

With the method and apparatus for providing a position service provided in the embodiments of the present disclosure, by sending a second request to a second network equipment based on a received first request, in which the first request includes at least one first terminal identifier, the second request is used to request the second network equipment to provide at least one second terminal identifier corresponding to the at least one first terminal identifier; receiving the at least one second terminal identifier sent by the second network equipment; and sending the at least one second terminal identifier to a third network equipment and/or a fourth network equipment, in which the at least one second terminal identifier is used to provide a ranging or sidelink positioning service to the third network equipment and/or the fourth network equipment, it may ensure that the gateway mobile location center can obtain the terminal identifier that can be recognized by the network element function, and send the terminal identifier to the corresponding network element function to provide the ranging or sidelink positioning service.

It should be understood that the foregoing general description and the following detailed description are exemplary and explanatory only, and are not restrictive of the present disclosure.

### BRIEF DESCRIPTION OF THE DRAWINGS

In order to more clearly illustrate the technical solutions in the embodiments of the present disclosure or the background technology, the drawings required for use in the embodiments of the present disclosure or the background technology will be described below.
FIG. 1 is a schematic diagram of a communication system according to an embodiment of the present disclosure;
FIG. 2 is a flowchart of a method for obtaining a position service according to an embodiment of the present disclosure;
FIG. 3 is a flowchart of a method for obtaining a position service according to an embodiment of the present disclosure;
FIG. 4 is a flowchart of a method for obtaining a position service according to an embodiment of the present disclosure;
FIG. 5 is a flowchart of a method for obtaining a position service according to an embodiment of the present disclosure;
FIG. 6 is a flowchart of a method for obtaining a position service according to an embodiment of the present disclosure;
FIG. 7 is a flowchart of a method for obtaining a position service according to an embodiment of the present disclosure;
FIG. 8 is a flowchart of a method for obtaining a position service according to an embodiment of the present disclosure;
FIG. 9 is a flowchart of a method for obtaining a position service according to an embodiment of the present disclosure;
FIG. 10 is a flowchart of a method for obtaining a position service according to an embodiment of the present disclosure;
FIG. 11 is a flowchart of a method for obtaining a position service according to an embodiment of the present disclosure;
FIG. 12 is a block diagram showing an apparatus for obtaining a position service according to an embodiment of the present disclosure;
FIG. 13 is a block diagram showing an apparatus for obtaining a position service according to an embodiment of the present disclosure;
FIG. 14 is a block diagram showing an apparatus for obtaining a position service according to an embodiment of the present disclosure;
FIG. 15 is a block diagram showing an apparatus for obtaining a position service according to an embodiment of the present disclosure;
FIG. 16 is a block diagram of a communication system according to an embodiment of the present disclosure;
FIG. 17 is a block diagram of an apparatus for obtaining a position service according to an embodiment of the present disclosure; and
FIG. 18 is a block diagram of a chip according to an embodiment of the present disclosure.

### DETAILED DESCRIPTION

Exemplary embodiments will be described in detail hereinafter, examples of which are illustrated in the drawings. When the drawings are referred to in the following description, unless otherwise indicated, same numerals in different drawings represent same or similar elements. The implementations described in the following exemplary embodiments do not represent all implementations consistent with the present invention. Rather, they are merely examples of devices and methods consistent with some aspects of the present invention as recited in the appended claims.

The terms used in the present disclosure are for the purpose of describing particular embodiments only and are not intended to limit the present disclosure. The singular forms "a" and "the" used in the present disclosure and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present disclosure to describe various pieces of information, such information should not be limited to these terms. These terms are used only to distinguish pieces of information that are of the same type. For example, without departing from the scope of the present disclosure, first information may also be referred to as second information, and similarly, second information may also be referred to as first information. Depending on the context, for example, the expressions "if" and "on condition that" used herein may be interpreted as "in a case that" or "when" or "in response to determining".

The embodiments of the present disclosure are described in detail below, examples of which are illustrated in the accompanying drawings. The same or similar reference numerals refer to the same or similar elements throughout. The embodiments described below with reference to the drawings are illustrative and are intended to explain the present disclosure, but should not be construed as limiting the present disclosure.

In order to better understand a method for obtaining a position service disclosed in the embodiments of the present disclosure, a communication system to which the embodiments of the present disclosure can be applied is first described below.

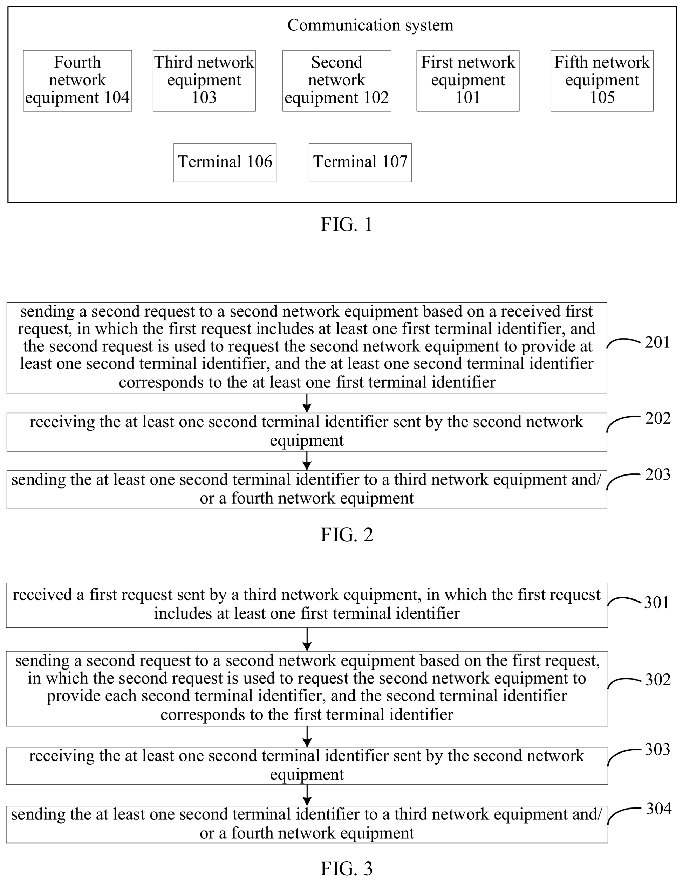

Referring to FIG. 1, FIG. 1 shows a schematic structural diagram of a communication system provided according to an embodiment of the present disclosure. The communication system can include, but is not limited to one first network equipment, one second network equipment, one third network equipment, one fourth network equipment, one fifth network equipment and at least two terminals, the number and form of devices shown in FIG. 1 are only intended to illustrate, rather than to constitute limitations on the embodiments of the present disclosure. In actual applications, two or more network equipments and two or more terminals can be included. The communication system shown in FIG. 1 is illustrated to include one network equipment 101, one second network equipment 102, one third network equipment 103, one fourth network equipment 104, one fifth network equipment 105 and two terminals 106 and 107.

It should be noted that the technical solutions of the embodiments of the present disclosure can be applied to various communication systems, for example, a long term evolution (LTE) system, a 5th generation (5G) mobile communication system, a 5G new radio (NR) system, or other future novel mobile communication systems.

In the embodiments of the present disclosure, the first network equipment 101, the second network equipment 102, the third network equipment 103, the fourth network equipment 104, and the fifth network equipment 105 are all entities on the network side that can independently complete certain transmission functions. The first network equipment 101, the second network equipment 102, the third network equipment 103, the fourth network equipment 104 and the fifth network equipment 105 can all be network element functions deployed in a core network. The first network equipment 101 can be a gateway mobile location center (GMLC), the second network equipment can be a unified data management (UDM), the third network equipment can be an access and mobility management function (AMF), the fourth network equipment can be a location management function (LMF), and the fifth network equipment can be an application function (AF) or a network function (NF). It can be understood that the NF can be deployed in the core network, and a trusted AF can also be deployed in the core network. The embodiments of the present disclosure do not limit the specific technology and specific device form adopted by the network equipment.

The terminals 106 and 107 in the embodiments of the present disclosure each may be an entity, such as a mobile phone, for receiving or transmitting signals. The terminal can also be referred to as a terminal, user equipment (UE), a mobile station (MS), a mobile terminal (MT), etc. The terminal can be a car with a communication function, a smart car, a mobile phone, a wearable device, a tablet computer (Pad), a computer with a radio transceiver function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present disclosure, a specific technology and a specific device form that are adopted by the terminal are not limited.

A ranging service refers to determining a relative distance between two terminals106 and 107 and/or determining a relative direction or angle of one terminal 106 relative to another terminal 107. A sidelink (SL) positioning service enables the terminal to use an SR5 (ranging/SL positioning interface)/PC5 (direct communication interface) link to obtain its absolute position, etc. The ranging/SL positioning service can be applied to various vertical fields such as consumption, smart home, smart city, smart transportation, smart retail and industry 4.0, etc.

When two terminals perform ranging/SL positioning service discovery or establish ranging/SL positioning communication, as well as in a ranging/SL positioning service request sent by the terminal to the 5G Core Network (5GC), a terminal identifier used is not the unique identifier used within the core network. If the core network cannot complete the mutual mapping of the two identifiers, some network functions within the core network (for example, AMF) will not be able to identify the terminal involved, and thus cannot select the network function (for example, LMF) that provides the ranging/SL positioning service for the terminal. In this case, for purposes of security and privacy, the LMF cannot directly provide an identifier of a candidate located terminal that it can obtain (that is, the unique identifier of the terminal used within the core network) to a target terminal, in which the candidate located terminal assists the target terminal in completing the SL positioning.

It can be understood that in each embodiment of the present disclosure, the information interaction between the terminal and each core network equipment is completed through transparent transmission of the access network equipment.

It can be understood that the communication system described in the embodiment of the present disclosure is intended to describe the technical solutions in the embodiments of the present disclosure more clearly, rather than to constitute a limitation on the technical solutions provided in the embodiments of the present disclosure. It can be known by those of ordinary skill in the art that, with the evolution of a system architecture and the emergence of new service scenarios, the technical solutions provided in the embodiments of the present disclosure is equally applicable to similar technical problems.

The t method and apparatus for obtaining a position service provided by the present disclosure will be introduced in detail below with reference to the accompanying drawings.

Referring to FIG. 2, FIG. 2 is a flowchart of a method for obtaining a position service according to an embodiment of the present disclosure. It should be noted that the method for obtaining a position service in the embodiment of the present disclosure is executed by a first network equipment. The method can be executed independently or in combination with any other embodiment of the present disclosure. As shown in FIG. 2, the method may include the following steps.

At step 201, the first network equipment sends a second request to a second network equipment based on a received first request, in which the first request includes at least one first terminal identifier, and the second request is used to request the second network equipment to provide at least one second terminal identifier, and the at least one second terminal identifier corresponds to the at least one first terminal identifier.

In an embodiment of the present disclosure, the first network equipment may send the second request to the second network equipment based on the received first request, in which the first request includes the at least one first terminal identifier, and the second request is used to request the second network equipment to provide each second terminal identifier.

In an embodiment of the present disclosure, optionally, the first request may be sent by a third network equipment, a fourth network equipment, or a fifth network equipment. The at least one first terminal identifier included in the first request is at least one first terminal identifier of a terminal participating in a ranging/SL positioning service.

In various embodiments of the present disclosure, the first network equipment is a gateway mobile location center (GMLC), the second network equipment is a unified data management (UDM), the third network equipment is an access and mobility management function (AMF), the fourth network equipment is a location management function (LMF), and the fifth network equipment is an application function (AF) or a network function (NF).

In some implementations, the first request is sent by a third network equipment to the first network equipment.

Optionally, the first request may be a request for requesting authorization from the first network equipment (such as an authorization request), or may be other requests, which is not limited in the present disclosure.

In a case where the first request is sent by the third network equipment to the first network equipment, the ranging/SL positioning service is initiated by a terminal, that is, mobile originated location request (MO-LR).

Optionally, the at least one second terminal identifier may be used by the third network equipment to select a suitable network equipment (for example, a fourth network equipment), and the fourth network equipment provides the ranging/SL positioning service for at least one terminal.

The at least one first terminal identifier is an application layer identity (ID) of a terminal, and the at least one second terminal identifier is a subscription permanent identifier (SUPI).

It can be understood that the at least one terminal may be a reference terminal and/or a target terminal participating in the ranging service, or a located terminal and/or a target terminal participating in the SL positioning service, or a client terminal, a server terminal, an assistance terminal, etc.

The following concepts need to be explained.

Target terminal (also called Target UE) refers to a terminal whose distance, direction and/or position is measured with the support of one or more reference UEs using a sidelink in the ranging service and SL positioning.

Reference terminal (also called Reference UE) refers to a terminal that supports the positioning of a target UE by using a sidelink, for example, by using a sidelink to send and/or receive a reference signal for positioning, provide positioning-related information, etc.

Located terminal (also called Located UE) refers to a reference UE whose location is known or can be learned using Uu-based positioning. The located UE can be used to determine a location of a target UE using sidelink positioning.

Client terminal (also called Client UE) refers to a third-party UE other than the reference UE and the target UE, which initiates a ranging/SL positioning service request on behalf of the applications residing on it.

Server terminal (also called Server UE) refers to a terminal that provides method determination, auxiliary data distribution and/or position calculation functions and/or positioning calculation functions for services based on sidelink positioning and ranging. It interacts with other UEs through PC5 when necessary to determine a ranging/SL positioning method, distribute auxiliary data and calculate a position of the target UE. If a target UE or reference UE supports any of the above functions, it can act as a server UE.

Assistance terminal (also called Assistance UE) refers to a relay UE that can assist two UEs in performing the ranging/SL positioning service.

In some implementations, the first request is sent by the fifth network equipment to the first network equipment.

Optionally, the first request may be a request for requesting the ranging/SL positioning service from the first network equipment, or may be other requests, which is not limited in the present disclosure.

In a case where the first request is sent by the fifth network equipment to the first network equipment, the ranging/SL positioning service is initiated by the fifth network equipment, that is, mobile terminated location request (MT-LR).

Optionally, the fifth network equipment may directly send the first request to the first network equipment, or may send the first request to the first network equipment via a network exposure function (NEF).

It can be understood that a trusted fifth network equipment can directly send the first request to the first network equipment.

Optionally, the at least one second terminal identifier may be used by the third network equipment to select a suitable network equipment (for example, a fourth network equipment), and the fourth network equipment provides the ranging/SL positioning service for the at least one terminal.

The at least one first terminal identifier is an application layer ID of a terminal, and the at least one second terminal identifier is a SUPI.

It can be understood that the at least one terminal may be a reference terminal and/or a target terminal participating in the ranging service, or a located terminal and/or a target terminal participating in the SL positioning service, or a client terminal, a server terminal, an assistance terminal, etc.

In some implementations, the first request is sent by the fourth network equipment to the first network equipment.

Optionally, the first request may be a request for requesting at least one second terminal identifier of a located terminal (such as a located UE ID request), may also be a request for simultaneously requesting authorization from the first network equipment (such as an authorization request), or may also be other requests, which are not limited in this disclosure.

In a case where the first request is sent by the fourth network equipment to the first network equipment, the ranging/SL positioning service is initiated by the fifth network equipment, that is, mobile terminated location request (MT-LR).

Optionally, the at least one first terminal identifier in the first request is a first terminal identifier of a terminal in a candidate positioning terminal list. The candidate positioning terminal list is provided by the fourth network equipment to the target terminal to participate in the network-assisted SL positioning of the target terminal.

Optionally, the at least one second terminal identifier may be used by the fourth network equipment to provide the ranging/SL positioning service for at least one terminal.

Specifically, the at least one second terminal identifier may be provided by the fourth network equipment to the target terminal, and may be used by the target terminal to discover and locate the terminal.

The at least one first terminal identifier is a SUPI of a terminal, and the at least one second terminal identifier is an application layer ID of the terminal.

Optionally, in some implementations, the first network equipment may store a mapping relationship between the first terminal identifier and the second terminal identifier. After receiving the first request, if the mapping relationship has been stored in the first network equipment, the first network equipment may directly provide the at least one second terminal identifier to the third network equipment and/or the fourth network equipment, without sending a second request to the second network equipment to obtain the at least one second terminal identifier.

In various embodiments of the present disclosure, the second request may be used for calling the Nudm_SDM_Get service operation, or calling the Nudm_UECM_Get service operation. The second request may also be included in other service operation call processes, which is not limited in the present disclosure.

At step 202, the at least one second terminal identifier sent by the second network equipment is received.

In an embodiment of the present disclosure, after the first network equipment sends the second request to the second network equipment based on the received first request, the first network equipment may receive the at least one second terminal identifier sent by the second network equipment.

It can be understood that the second network equipment may send the at least one second terminal identifier to the first network equipment according to the second request based on the locally stored user data and the like.

The user data stored in the second network equipment may include at least one of the following: subscription data, registration data, context data, or the like.

At step 203, the at least one second terminal identifier is sent to a third network equipment and/or a fourth network equipment.

In an embodiment of the present disclosure, after obtaining the at least one second terminal identifier, the first network equipment may send the at least one second terminal identifier to the third network equipment and/or the fourth network equipment, and the at least one second terminal identifier is used for the third network equipment and/or the fourth network equipment to provide the ranging/SL positioning service.

In some implementations, the first request is sent by the third network equipment to the first network equipment.

The first network equipment may send the at least one second terminal identifier to the third network equipment, and the at least one second terminal identifier may be used by the third network equipment to select a suitable network equipment (for example, the fourth network equipment), and the fourth network equipment provides the ranging/SL positioning service for the at least one terminal.

Optionally, after selecting a suitable fourth network equipment, the third network equipment may send the at least one second terminal identifier to the fourth network equipment.

In some implementations, the first request is sent by a fifth network equipment to the first network equipment.

The first network equipment may send the at least one second terminal identifier to the third network equipment, and the at least one second terminal identifier may be used by the third network equipment to select a suitable network equipment (for example, the fourth network equipment), and the fourth network equipment provides the ranging/SL positioning service for at least one terminal.

Optionally, after selecting a suitable fourth network equipment, the third network equipment may send the at least one second terminal identifier to the fourth network equipment.

In some implementations, the first request is sent by the fourth network equipment to the first network equipment.

The first network equipment may send the at least one second terminal identifier to the fourth network equipment, and the at least one second terminal identifier may be used by the fourth network equipment to provide the ranging/SL positioning service for at least one terminal.

Specifically, the at least one second terminal identifier may be provided by the fourth network equipment to a target terminal, and may be used by the target terminal to discover and locate the terminal.

Optionally, after obtaining the at least one second terminal identifier, the fourth network equipment may store a mapping relationship between the first terminal identifier and each second terminal identifier, so that in the subsequent ranging/SL positioning service process, there is no need to interact with the first network equipment to obtain the second terminal identifier.

It should be noted that in various embodiments of the present disclosure, the application layer ID of the terminal may be a generic public subscription identifier (GPSI), or another terminal identity provided by the ranging/SL positioning service that can be used to identify the terminal identity, which is not limited herein.

It can be understood that, for the mapping relationship between GPSI and SUPI, or the mapping relationship between the other terminal identity and SUPI, the second network equipment may determine the mapping relationship according to the locally stored user data.

In summary, by sending the second request to the second network equipment based on the received first request, in which the first request includes the at least one first terminal identifier, and the second request is used to request the second network equipment to provide the at least one second terminal identifier corresponding to the at least one first terminal identifier; receiving the at least one second terminal identifier sent by the second network equipment; and sending the at least one second terminal identifier to the third network equipment and/or the fourth network equipment, in which the at least one second terminal identifier is used for the third network equipment and/or the fourth network equipment to provide the ranging or SL positioning service, it can ensure that the gateway mobile location center can obtain the terminal identifier that can be recognized by the network element function, and send the terminal identifier to the corresponding network element function to provide the ranging or SL positioning service.

Referring to FIG. 3, FIG. 3 is a flowchart of a method for obtaining a position service provided in an embodiment of the present disclosure. It should be noted that the method for obtaining a position service in the embodiment of the present disclosure is executed by a first network equipment. The method can be executed independently or in combination with any other embodiments of the present disclosure. As shown in FIG. 3, the method may include the following steps.

At step 301, a first request sent by a third network equipment is received, in which the first request includes at least one first terminal identifier.

In an embodiment of the present disclosure, the first request is sent by the third network equipment to the first network equipment, and the at least one first terminal identifier included in the first request is at least one first terminal identifier of a terminal participating in a ranging/SL positioning service.

Optionally, the first request may be a request for requesting authorization from the first network equipment (such as an authorization request), or may be other requests, which is not limited in the present disclosure.

In a case where the first request is sent by the third network equipment to the first network equipment, the ranging/SL positioning service is initiated by a terminal, that is MO-LR.

The first terminal identifier is an application layer ID of a terminal.

It can be understood that the at least one terminal may be a reference terminal and/or a target terminal participating in the ranging service, or a located terminal and/or a target terminal participating in the SL positioning service, or a client terminal, a server terminal, an assistance terminal, etc.

At step 302, a second request is sent to a second network equipment based on the first request, in which the second request is used to request the second network equipment to provide each second terminal identifier, and the second terminal identifier corresponds to the first terminal identifier.

In an embodiment of the present disclosure, the first network equipment may send the second request to the second network equipment based on the first request, to request the second network equipment to provide each second terminal identifier that corresponds to the first terminal identifier.

The first terminal identifier is an application layer ID of a terminal, and the second terminal identifier is a SUPI.

Optionally, in some implementations, the first network equipment may store a mapping relationship between the first terminal identifier and the second terminal identifier. After receiving the first request, if the mapping relationship has been stored in the first network equipment, the first network equipment may directly provide the at least one second terminal identifier to a third network equipment and/or a fourth network equipment, without sending the second request to the second network equipment to obtain the at least one second terminal identifier.

In various embodiments of the present disclosure, the second request may be used for calling the Nudm_SDM_Get service operation, or calling the Nudm_UECM_Get service operation. The second request may also be included in other service operation call processes, which is not limited in the present disclosure.

At step 303, the at least one second terminal identifier sent by the second network equipment is received.

In an embodiment of the present disclosure, after the first network equipment sends the second request to the second network equipment based on the received first request, the first network equipment may receive the at least one second terminal identifier sent by the second network equipment.

It can be understood that the second network equipment may send the at least one second terminal identifier to the first network equipment according to the second request based on the locally stored user data and the like.

The user data stored in the second network equipment may include at least one of the following: subscription data, registration data, context data, or the like.

At step 304, the at least one second terminal identifier is sent to a third network equipment and/or a fourth network equipment.

In an embodiment of the present disclosure, after obtaining the at least one second terminal identifier, the first network equipment may send the at least one second terminal identifier to the third network equipment and/or the fourth network equipment, and the fourth network equipment provides the ranging/SL positioning service to the at least one terminal.

In an embodiment of the present disclosure, the first network equipment may send the at least one second terminal identifier to the third network equipment, and the at least one second terminal identifier may be used by the third network equipment to select a suitable network equipment (for example, the fourth network equipment), and the fourth network equipment provides the ranging/SL positioning service for the at least one terminal.

Further, after selecting a suitable fourth network equipment, the third network equipment may send the at least one second terminal identifier to the fourth network equipment, so that the fourth network equipment may determine at least one terminal participating in the ranging/SL positioning service and provide the at least one terminal with the ranging/SL positioning service.

It should be noted that in various embodiments of the present disclosure, the application layer ID of the terminal may be a generic public subscription identifier (GPSI), or another terminal identity provided by the ranging/SL positioning service that can be used to identify the terminal identity, which is not limited herein.

It can be understood that, for the mapping relationship between GPSI and SUPI, or the mapping relationship between the other terminal identity and SUPI, the second network equipment may determine the mapping relationship according to the locally stored user data.

In various embodiments of the present disclosure, the first network equipment is a gateway mobile location center (GMLC), the second network equipment is a unified data management (UDM), the third network equipment is an access mobility and management function (AMF), and the fourth network equipment is a location management function (LMF).

It should also be noted that in an embodiment of the present disclosure, the first network equipment is able to determine whether at least one terminal included in the first request is an authorized terminal, and the first network equipment only sends a second terminal identifier of the authorized terminal to the third network equipment (if the authorization is passed, the second terminal identifier is sent).

In summary, by receiving the first request sent by the third network equipment, in which first request includes the at least one first terminal identifier; sending the second request to the second network equipment based on the first request, in which the second request is used to request the second network equipment to provide the at least one second terminal identifier corresponding to the at least one first terminal identifier; receiving the at least one second terminal identifier sent by the second network equipment; and sending the at least one second terminal identifier to the third network equipment and/or the fourth network equipment, in which the at least one second terminal identifier is used for the third network equipment and/or the fourth network equipment to provide the ranging or SL positioning service, it can ensure that the gateway mobile location center can obtain the terminal identifier that can be recognized by the network element function, and send the terminal identifier to the corresponding network element function to provide the ranging or SL positioning service.

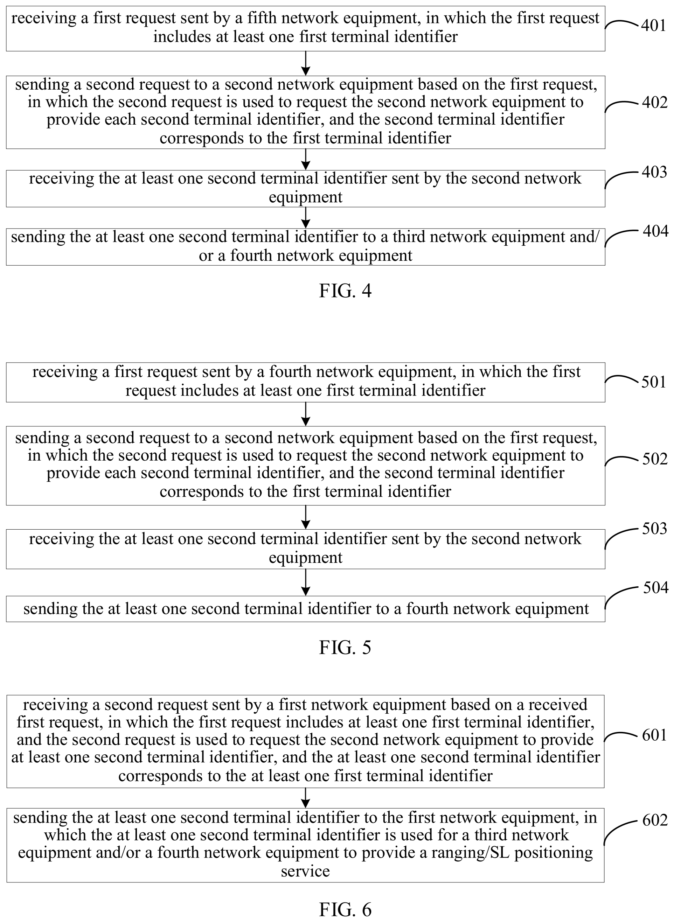

Referring to FIG. 4, FIG. 4 is a flowchart of a method for obtaining a position service provided in an embodiment of the present disclosure. It should be noted that the method for obtaining a position service in the embodiment of the present disclosure is executed by a first network equipment. The method can be executed independently or in combination with any other embodiments of the present disclosure. As shown in FIG. 4, the method may include the following steps.

At step 401, a first request sent by a fifth network equipment is received, in which the first request includes at least one first terminal identifier.

In an embodiment of the present disclosure, the first request is sent by the fifth network equipment to the first network equipment, and the at least one first terminal identifier included in the first request is at least one first terminal identifier of a terminal participating in a ranging/SL positioning service.

Optionally, the first request may be a request for requesting the ranging/SL service from the first network equipment, or may be other requests, which is not limited in the present disclosure.

In a case where the first request is sent by the fifth network equipment to the first network equipment, the ranging/SL positioning service is initiated by the fifth network equipment, that is MT-LR.

Optionally, the fifth network equipment may directly send the first request to the first network equipment, or may send the first request to the first network equipment via a network exposure function (NEF).

It can be understood that a trusted fifth network equipment can directly send the first request to the first network equipment.

The first terminal identifier is an application layer ID of a terminal.

It can be understood that the at least one terminal may be a reference terminal and/or a target terminal participating in the ranging service, or a located terminal and/or a target terminal participating in the SL positioning service, or a client terminal, a server terminal, an assistance terminal, etc.

At step 402, a second request is sent to a second network equipment based on the first request, in which the second request is used to request the second network equipment to provide each second terminal identifier, and the second terminal identifier corresponds to the first terminal identifier.

In an embodiment of the present disclosure, the first network equipment may send the second request to the second network equipment based on the first request, to request the second network equipment to provide each second terminal identifier that corresponds to the first terminal identifier.

The first terminal identifier is an application layer ID of a terminal, and the second terminal identifier is a SUPI.

Optionally, in some implementations, the first network equipment may store a mapping relationship between the first terminal identifier and the second terminal identifier. After receiving the first request, if the mapping relationship has been stored in the first network equipment, the first network equipment may directly provide the at least one second terminal identifier to a third network equipment and/or a fourth network equipment, without sending the second request to the second network equipment to obtain the at least one second terminal identifier.

In various embodiments of the present disclosure, the second request may be used for calling the Nudm_SDM_Get service operation, or calling the Nudm_UECM_Get service operation. The second request may also be included in other service operation call processes, which is not limited in the present disclosure.

At step 403, the at least one second terminal identifier sent by the second network equipment is received.

In an embodiment of the present disclosure, after the first network equipment sends the second request to the second network equipment based on the received first request, the first network equipment may receive the at least one second terminal identifier sent by the second network equipment.

It can be understood that the second network equipment may send the at least one second terminal identifier to the first network equipment according to the second request based on the locally stored user data and the like.

The user data stored in the second network equipment may include at least one of the following: subscription data, registration data, context data, or the like.

At step 404, the at least one second terminal identifier is sent to a third network equipment and/or a fourth network equipment.

In an embodiment of the present disclosure, after obtaining the at least one second terminal identifier, the first network equipment may send the at least one second terminal identifier to the third network equipment and/or the fourth network equipment, and the fourth network equipment provides the ranging/SL positioning service to the at least one terminal.

In an embodiment of the present disclosure, the first network equipment may send the at least one second terminal identifier to the third network equipment, and the at least one second terminal identifier may be used by the third network equipment to select a suitable network equipment (for example, the fourth network equipment), and the fourth network equipment provides the ranging/SL positioning service for the at least one terminal.

Further, after selecting a suitable fourth network equipment, the third network equipment may send the at least one second terminal identifier to the fourth network equipment, so that the fourth network equipment may determine at least one terminal participating in the ranging/SL positioning service and provide the at least one terminal with the ranging/SL positioning service.

It should be noted that in various embodiments of the present disclosure, the application layer ID of the terminal may be a generic public subscription identifier (GPSI), or another terminal identity provided by the ranging/SL positioning service that can be used to identify the terminal identity, which is not limited herein.

It can be understood that, for the mapping relationship between GPSI and SUPI, or the mapping relationship between the other terminal identity and SUPI, the second network equipment may determine the mapping relationship according to the locally stored user data.

In various embodiments of the present disclosure, the first network equipment is a gateway mobile location center (GMLC), the second network equipment is a unified data management (UDM), the third network equipment is an access mobility and management function (AMF), the fourth network equipment is a location management function (LMF), and the fifth network equipment is an application function (AF) or a network function (NF).

It should also be noted that in an embodiment of the present disclosure, the first network equipment is able to determine whether at least one terminal included in the first request is an authorized terminal, and the first network equipment only sends a second terminal identifier of the authorized terminal to the third network equipment (if the authorization is passed, the second terminal identifier is sent).

In summary, by receiving the first request sent by the fifth network equipment, in which first request includes the at least one first terminal identifier; sending the second request to the second network equipment based on the first request, in which the second request is used to request the second network equipment to provide the at least one second terminal identifier corresponding to the at least one first terminal identifier; receiving the at least one second terminal identifier sent by the second network equipment; and sending the at least one second terminal identifier to the third network equipment and/or the fourth network equipment, in which the at least one second terminal identifier is used for the third network equipment and/or the fourth network equipment to provide the ranging or SL positioning service, it can ensure that the gateway mobile location center can obtain the terminal identifier that can be recognized by the network element function, and send the terminal identifier to the corresponding network element function to provide the ranging or SL positioning service.

Referring to FIG. 5, FIG. 5 is a flowchart of a method for obtaining a position service provided in an embodiment of the present disclosure. It should be noted that the method for obtaining a position service in the embodiment of the present disclosure is executed by a first network equipment. The method can be executed independently or in combination with any other embodiments of the present disclosure. As shown in FIG. 5, the method may include the following steps.

At step 501, a first request sent by a fourth network equipment is received, in which the first request includes at least one first terminal identifier.

In an embodiment of the present disclosure, the first request is sent by the fourth network equipment to the first network equipment, and the at least one first terminal identifier included in the first request is at least one first terminal identifier of a terminal participating in a ranging/SL positioning service.

Optionally, the first request may be a request for requesting a second terminal identifier of at least one located terminal (such as a located UE ID request), may also be a request for simultaneously requesting authorization from the first network equipment (such as an authorization request), or may also be other requests, which are not limited in this disclosure.

In a case where the first request is sent by the fourth network equipment to the first network equipment, the ranging/SL positioning service is initiated by a fifth network equipment, that is, mobile terminated location request (MT-LR).

Optionally, the at least one first terminal identifier in the first request is at least one first terminal identifier of a terminal in a candidate positioning terminal list. The candidate positioning terminal list is provided by the fourth network equipment to the target terminal to participate in the network-assisted SL positioning of the target terminal.

The first terminal identifier is a SUPI of the terminal.

At step 502, a second request is sent to a second network equipment based on the first request, in which the second request is used to request the second network equipment to provide each second terminal identifier, and the second terminal identifier corresponds to the first terminal identifier.

In an embodiment of the present disclosure, the first network equipment may send the second request to the second network equipment based on the first request, to request the second network equipment to provide each second terminal identifier \ that corresponds to the first terminal identifier.

The first terminal identifier is a SUPI, and the second terminal identifier is an application layer ID of a terminal.

Optionally, in some implementations, the first network equipment may store a mapping relationship between the first terminal identifier and the second terminal identifier. After receiving the first request, if the mapping relationship has been stored in the first network equipment, the first network equipment may directly provide the at least one second terminal identifier to a third network equipment and/or a fourth network equipment, without sending the second request to the second network equipment to obtain the at least one second terminal identifier.

In various embodiments of the present disclosure, the second request may be used for calling the Nudm_SDM_Get service operation, or calling the Nudm_UECM_Get service operation. The second request may also be included in other service operation call processes, which is not limited in the present disclosure.

At step 503, the at least one second terminal identifier sent by the second network equipment is received.

In an embodiment of the present disclosure, after the first network equipment sends the second request to the second network equipment based on the received first request, the first network equipment may receive the at least one second terminal identifier sent by the second network equipment.

It can be understood that the second network equipment may send the at least one second terminal identifier to the first network equipment according to the second request based on the locally stored user data and the like.

The user data stored in the second network equipment may include at least one of the following: subscription data, registration data, context data, or the like.

At step 504, the at least one second terminal identifier is sent to a fourth network equipment.

In an embodiment of the present disclosure, after obtaining the at least one second terminal identifier, the first network equipment may send the at least one second terminal identifier to the fourth network equipment, and the fourth network equipment provides the ranging/SL positioning service to the at least one terminal.

Specifically, the at least one second terminal identifier may be provided by the fourth network equipment to a target terminal, and may be used by the target terminal to discover and locate the terminal.

Optionally, after obtaining the at least one second terminal identifier, the fourth network equipment may store a mapping relationship between the first terminal identifier and each second terminal identifier, so that in the subsequent ranging/SL positioning service process, there is no need to interact with the first network equipment to obtain the second terminal identifier.

It should be noted that in various embodiments of the present disclosure, the application layer ID of the terminal may be a generic public subscription identifier (GPSI), or another terminal identity provided by the ranging/SL positioning service that can be used to identify the terminal identity, which is not limited herein.

It can be understood that, for the mapping relationship between GPSI and SUPI, or the mapping relationship between the other terminal identity and SUPI, the second network equipment may determine the mapping relationship according to the locally stored user data.

It should also be noted that in an embodiment of the present disclosure, the first network equipment is able to determine whether the at least one first terminal identifier included in the first request is a first terminal identifier of an authorized terminal, and the first network equipment only sends a second terminal identifier of the authorized terminal to the fourth network equipment.

In summary, by receiving the first request sent by the fourth network equipment, in which first request includes at least one first terminal identifier; sending the second request to the second network equipment based on the first request, in which the second request is used to request the second network equipment to provide the at least one second terminal identifier corresponding to the at least one first terminal identifier; receiving the at least one second terminal identifier sent by the second network equipment; and sending the at least one second terminal identifier to the fourth network equipment, in which the at least one second terminal identifier is used for the fourth network equipment to provide the ranging or SL positioning service, it can ensure that the gateway mobile location center can obtain the terminal identifier that can be recognized by the network element function, and send the terminal identifier to the corresponding network element function to provide the ranging or SL positioning service.

Referring to FIG. 6, FIG. 6 is a flowchart of a method for obtaining a position service provided in an embodiment of the present disclosure. It should be noted that the method for obtaining a position service in the embodiment of the present disclosure is executed by a second network equipment. The method can be executed independently or in combination with any other embodiments of the present disclosure. As shown in FIG. 6, the method may include the following steps.

At step 601, a second request sent by a first network equipment based on a received first request is received, in which the first request includes at least one first terminal identifier, and the second request is used to request the second network equipment to provide at least one second terminal identifier, and the at least one second terminal identifier corresponds to the at least one first terminal identifier.

In an embodiment of the present disclosure, the second network equipment may receive the second request sent by the first network equipment based on the received first request, in which the first request includes the at least one first terminal identifier, and the second request is used to request the second network equipment to provide each second terminal identifier.

In an embodiment of the present disclosure, optionally, the first request may be sent by a third network equipment, a fourth network equipment, or a fifth network equipment. The at least one first terminal identifier included in the first request is at least one first terminal identifier of a terminal participating in a ranging/SL positioning service.

In various embodiments of the present disclosure, the first network equipment is a gateway mobile location center (GMLC), the second network equipment is a unified data management (UDM), the third network equipment is an access and mobility management function (AMF), the fourth network equipment is a location management function (LMF), and the fifth network equipment is an application function (AF) or a network function (NF).

In some implementations, the first terminal identifier is an application layer identity (ID) of a terminal, and the second terminal identifier is a subscription permanent identifier (SUPI).

In some implementations, the first terminal identifier is a SUPI of a terminal, and the second terminal identifier is an application layer ID of the terminal.

It can be understood that the at least one terminal may be a reference terminal and/or a target terminal participating in the ranging service, or a located terminal and/or a target terminal participating in the SL positioning service, or a client terminal, a server terminal, an assistance terminal, etc.

In various embodiments of the present disclosure, the second request may be used for calling the Nudm_SDM_Get service operation, or calling the Nudm_UECM_Get service operation. The second request may also be included in other service operation call processes, which is not limited in the present disclosure.

It an embodiment of the present disclosure, the second network equipment may determine the second terminal identifier corresponding to each first terminal identifier based on the locally stored user data.

The user data stored in the second network equipment may include at least one of the following: subscription data, registration data, context data, or the like.

It should be noted that in various embodiments of the present disclosure, the application layer ID of the terminal may be a generic public subscription identifier (GPSI), or another terminal identity provided by the ranging/SL positioning service that can be used to identify the terminal identity, which is not limited herein.

It can be understood that, for the mapping relationship between GPSI and SUPI, or the mapping relationship between the other terminal identity and SUPI, the second network equipment may determine the mapping relationship according to the locally stored user data.

At step 602, the at least one second terminal identifier is sent to the first network equipment, in which the at least one second terminal identifier is used for a third network equipment and/or a fourth network equipment to provide a ranging/SL positioning service.

In an embodiment of the present disclosure, after determining the at least one second terminal identifier, the second network equipment may send the at least one second terminal identifier to the first network equipment, and the at least one second terminal identifier is used for the third network equipment and/or the fourth network equipment to provide the ranging/SL positioning service.

In the embodiment of the present disclosure, the ranging/SL positioning service may be initiated by a terminal, that is, MO-LR; or the ranging/SL positioning service may be initiated by the fifth network equipment, that is, MT-LR.

In summary, by receiving the second request sent by the first network equipment based on the received first request, in which the first request includes the at least one first terminal identifier, the second request is used to request the second network equipment to provide at least one second terminal identifier, the at least one second terminal identifier corresponds to the at least one first terminal identifier; and sending the at least one second terminal identifier to the first network equipment, in which the at least one second terminal identifier is used for the third network equipment and/or the fourth network equipment to provide the ranging or SL positioning service, it can ensure that the gateway mobile location center can obtain the terminal identifier that can be recognized by the network element function, and send the terminal identifier to the corresponding network element function to provide the ranging or SL positioning service.

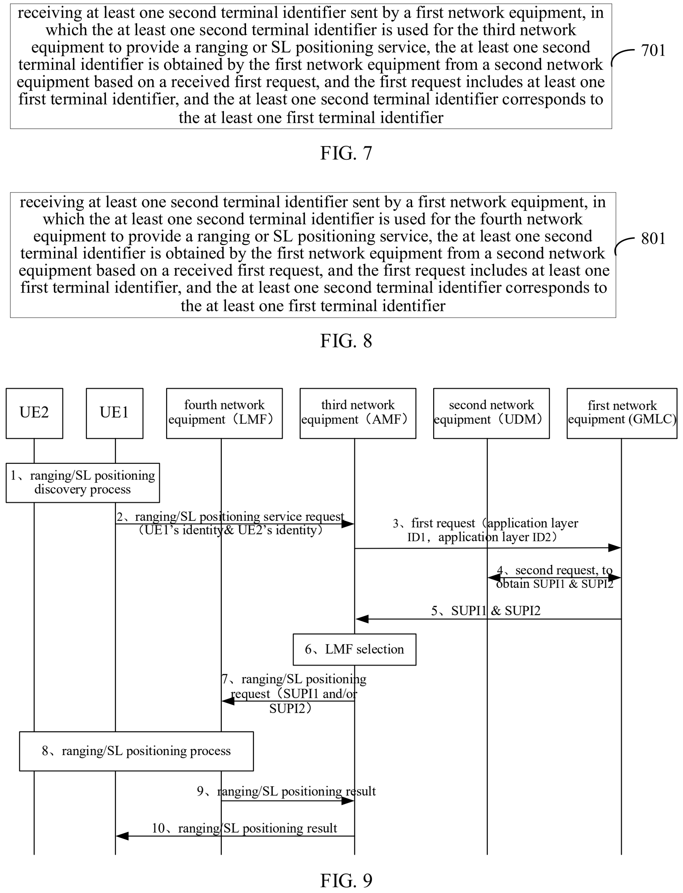

Referring to FIG. 7, FIG. 7 is a flowchart of a method for obtaining a position service provided in an embodiment of the present disclosure. It should be noted that the method for obtaining a position service in the embodiment of the present disclosure is executed by a third network equipment. The method can be executed independently or in combination with any other embodiments of the present disclosure. As shown in FIG. 7, the method may include the following steps.

At step 701, at least one second terminal identifier sent by a first network equipment is received, in which the at least one second terminal identifier is used for the third network equipment to provide a ranging or SL positioning service, the at least one second terminal identifier is obtained by the first network equipment from a second network equipment based on a received first request, and the first request includes at least one first terminal identifier, and the at least one second terminal identifier corresponds to the at least one first terminal identifier.

In an embodiment of the present disclosure, the third network equipment is capable of receiving the at least one second terminal identifier sent by the first network equipment, the at least one second terminal identifier is obtained by the first network equipment from the second network equipment based on the received first request, the first request includes the at least one first terminal identifier, and the at least one second terminal identifier corresponds to the at least one first terminal identifier. The at least one second terminal identifier is used by the third network equipment to provide the ranging/SL positioning service.

In some implementations, the first request is sent by the third network equipment to the first network equipment, and the first request includes at least one first terminal identifier of a terminal participating in the ranging/SL positioning service.

In some implementations, the first request is sent by a fifth network equipment to the first network equipment, and the first request includes at least one first terminal identifier of a terminal participating in the ranging/SL positioning service.

In various embodiments of the present disclosure, the third network equipment may select a fourth network equipment based on the at least one second terminal identifier, and send the at least one second terminal identifier to the fourth network equipment. The at least one second terminal identifier is used for the fourth network equipment to provide the ranging/SL positioning service.

Specifically, the at least one second terminal identifier may be provided by the fourth network equipment to a target terminal, and may be used by the target terminal to discover and locate the terminal.

In various embodiments of the present application, the first terminal identifier is an application layer ID of a terminal, and the second terminal identifier is a SUPI of the terminal.

In various embodiments of the present disclosure, the first network equipment is a gateway mobile location center (GMLC), the second network equipment is a unified data management (UDM), the third network equipment is an access and mobility management function (AMF), the fourth network equipment is a location management function (LMF), and the fifth network equipment is an application function (AF) or a network function (NF).

It should be noted that in various embodiments of the present disclosure, the application layer ID of the terminal may be a generic public subscription identifier (GPSI), or another terminal identity provided by the ranging/SL positioning service that can be used to identify the terminal identity, which is not limited herein.

It can be understood that, for the mapping relationship between GPSI and SUPI, or the mapping relationship between the other terminal identity and SUPI, the second network equipment may determine the mapping relationship according to the locally stored user data.

The user data stored in the second network equipment may include at least one of the following: subscription data, registration data, context data, or the like.

In the embodiment of the present disclosure, the ranging/SL positioning service may be initiated by a terminal, that is, MO-LR; or the ranging/SL positioning service may be initiated by the fifth network equipment, that is, MT-LR.

In summary, by receiving the at least one second terminal identifier sent by the first network equipment, in which the at least one second terminal identifier is used for the third network equipment to provide the ranging or SL positioning service, the at least one second terminal identifier is obtained by the first network equipment from the second network equipment based on the received first request, and the first request includes the at least one first terminal identifier, and the at least one second terminal identifier corresponds to the at least one first terminal identifier, it can ensure that the gateway mobile location center can obtain the terminal identifier that can be recognized by the network element function, and send the terminal identifier to the corresponding network element function to provide the ranging or SL positioning service.

Referring to FIG. 8, FIG. 8 is a flowchart of a method for obtaining a position service provided in an embodiment of the present disclosure. It should be noted that the method for obtaining a position service in the embodiment of the present disclosure is executed by a fourth network equipment. The method can be executed independently or in combination with any other embodiments of the present disclosure. As shown in FIG. 8, the method may include the following steps.

At step 801, at least one second terminal identifier sent by a first network equipment is received, in which the at least one second terminal identifier is used for the fourth network equipment to provide a ranging or SL positioning service, the at least one second terminal identifier is obtained by the first network equipment from a second network equipment based on a received first request, and the first request includes at least one first terminal identifier, and the at least one second terminal identifier corresponds to the at least one first terminal identifier.

In an embodiment of the present disclosure, the fourth network equipment is capable of receiving the at least one second terminal identifier sent by the first network equipment, the at least one second terminal identifier is obtained by the first network equipment from the second network equipment based on the received first request, the first request includes the at least one first terminal identifier, and the at least one second terminal identifier corresponds to the at least one first terminal identifier. The at least one second terminal identifier is used by the fourth network equipment to provide the ranging/SL positioning service.

Specifically, the at least one second terminal identifier may be provided by the fourth network equipment to a target terminal, and may be used by the target terminal to discover and locate the terminal.

In some implementations, the first request is sent by the third network equipment to the first network equipment, and the first request includes at least one first terminal identifier of a terminal participating in the ranging/SL positioning service.

In some implementations, the first request is sent by a fifth network equipment to the first network equipment, and the first request includes at least one first terminal identifier of a terminal participating in the ranging/SL positioning service.

In the above two implementations, the fourth network equipment receives the at least one second terminal identifier sent by the first network equipment via the third network equipment, and the fourth network equipment is selected by the third network equipment based on the at least one second terminal identifier (that is, the third network equipment selects the fourth network equipment and sends the at least one second terminal identifier to the fourth network equipment).

The first terminal identifier is an application layer ID of a terminal, and the second terminal identifier is a SUPI of the terminal.

In some implementations, the first request is sent by the fourth network equipment to the first network equipment, and the first request includes at least one first terminal identifier of a terminal participating in the ranging or SL positioning service.

The fourth network equipment may directly receive the at least one second terminal identifier sent by the first network equipment.

The first terminal identifier is a SUPI, and the second terminal identifier is an application layer ID of the terminal.

Optionally, after obtaining the at least one second terminal identifier, the fourth network equipment may store a mapping relationship between the first terminal identifier and each second terminal identifier, so that in the subsequent ranging/SL positioning service process, there is no need to interact with the first network equipment to obtain the second terminal identifier.

In various embodiments of the present disclosure, the first network equipment is a gateway mobile location center (GMLC), the second network equipment is a unified data management (UDM), the third network equipment is an access mobility and management function (AMF), the fourth network equipment is a location management function (LMF), and the fifth network equipment is an application function (AF) or a network function (NF).

It should be noted that in various embodiments of the present disclosure, the application layer ID of the terminal may be a generic public subscription identifier (GPSI), or another terminal identity provided by the ranging/SL positioning service that can be used to identify the terminal identity, which is not limited herein.

It can be understood that, for the mapping relationship between GPSI and SUPI, or the mapping relationship between the other terminal identity and SUPI, the second network equipment may determine the mapping relationship according to the locally stored user data.

The user data stored in the second network equipment may include at least one of the following: subscription data, registration data, context data, or the like.

In the embodiment of the present disclosure, the ranging/SL positioning service may be initiated by a terminal, that is, MO-LR; or the ranging/SL positioning service may be initiated by the fifth network equipment, that is, MT-LR.

In summary, by receiving the at least one second terminal identifier the sent by the first network equipment, in which the at least one second terminal identifier is used for the fourth network equipment to provide the ranging or SL positioning service, the at least one second terminal identifier is obtained by the first network equipment from the second network equipment based on the received first request, and the first request includes the at least one first terminal identifier, and the at least one second terminal identifier corresponds to the at least one first terminal identifier, it can ensure that the gateway mobile location center can obtain the terminal identifier that can be recognized by the network element function, and send the terminal identifier to the corresponding network element function to provide the ranging or SL positioning service.

Referring to FIG. 9, FIG. 9 is a flowchart of a method for obtaining a position service provided in an embodiment of the present disclosure. The method can be executed independently or in combination with any other embodiments of the present disclosure. As shown in FIG. 9, the method may include the following steps.
1. UE1 and UE2 perform a ranging/SL positioning discovery process. Application layer ID1 of UE1 and application layer ID2 of UE2 are used for the discovery process between UE1 and UE2. After the ranging/SL positioning discovery process, UE1 can store application layer ID2.
2. UE1 sends a ranging/SL positioning service request to a third network equipment (AMF) to which UE1 belongs, including its own identity and UE2's identity.
   Optionally, the UE1's identity sent by UE1 may be SUCI or application layer ID1, and the UE2's identity sent by UE2 is application layer ID2.
3. In order to perform a check for authorization and obtain the SUPI corresponding to the application layer ID, a second network equipment (AMF) sends a first request to a first network equipment (GMLC).
   Optionally, the first request may simultaneously request a check for authorization.
4. The first network equipment (GMLC) sends a second request to a second network equipment (UDM) to obtain SUPI1 corresponding to the provided application layer ID1 and SUPI2 corresponding to the provided application layer ID2.

Optionally, the first network equipment (GMLC) calls the Nudm_SDM_Get service operation from the second network equipment (UDM) to obtain authorization information of UE1 and UE2, and calls the Nudm_SDM_Get service operation from UDM to obtain SUPI1 corresponding to the provided application layer ID1 and SUPI2 corresponding to the provided application layer ID2.

In some implementations, if the first network equipment (GMLC) provides the application layer ID to the second network equipment (UDM) to obtain authorization information, the mapped SUPI may be provided to the first network equipment (GMLC) in a Nudm_SDM_get response message. In this case, the Nudm_SDM_Get service operation is called only once.

5. The first network equipment (GMLC) returns a message including SUPI1 and SUPI2 to the third network equipment (AMF).

Optionally, if the check for authorization passes, the first network equipment (GMLC) returns an authorization response including SUPI1 and SUPI2 to the third network equipment (AMF).

6. The third network equipment (AMF) selects a suitable fourth network equipment (LMF) based on the received SUPI1 and/or SUPI2.

7. The third network equipment (AMF) sends a ranging/SL positioning request to the selected fourth network equipment (LMF), in which the request includes SUPI1 and/or SUPI2.

8. The fourth network equipment (LMF) triggers the ranging/SL positioning process for positioning the measurement between UE/UE1 and UE2.

9. After the ranging/SL positioning process is completed, the fourth network equipment (LMF) returns the measurement result.

10. The third network equipment (AMF) reports the ranging/SL positioning result to UE1.

In various embodiments of the present disclosure, the application layer ID of the terminal may be a GPSI, or another terminal identity provided by the ranging/SL positioning service that can be used to identify the terminal identity, which is not limited herein.

In the embodiments of the present disclosure, UE1 and UE2 may be reference terminals and/or target terminals participating in the ranging service, or may be located terminals and/or target terminals participating in the SL positioning service, or may be client terminals, server terminals, assistance terminals, and the like.

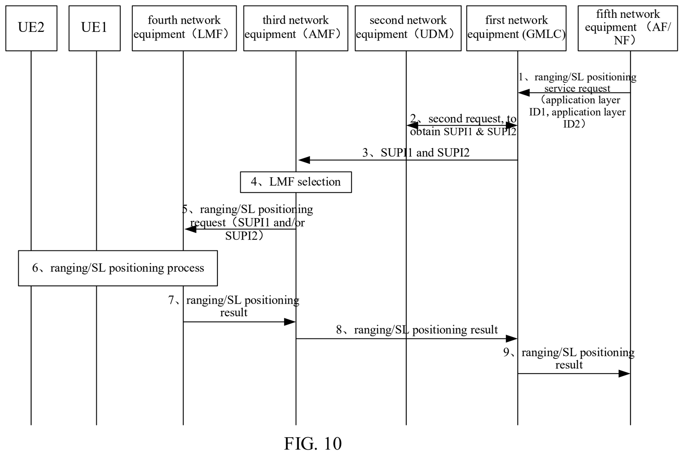

Referring to FIG. 10, FIG. 10 is a flowchart of a method for obtaining a position service provided in an embodiment of the present disclosure. The method can be executed independently or in combination with any other embodiments of the present disclosure. As shown in FIG. 10, the method may include the following steps.
1. A fifth network equipment (AF/NF) sends a ranging/SL positioning service request to a first network equipment (GMLC), in which the request includes application layer ID1 of UE1 and application layer ID2 of UE2 provided by the application.

Optionally, the fifth network equipment may directly send the first request to the first network equipment, or may send the first request to the first network equipment through a network exposure function (NEF).

In some implementations, the terminal identifier included in the request may also be SUPI1 of UE1 and SUPI2 of UE2. It is understood that in this case, the first network equipment (GMLC) does not need to request the second network equipment (UDM) to provide the SUPI corresponding to the application layer ID (i.e., no ID mapping is required).

2. The first network equipment (GMLC) sends a second request to the second network equipment (UDM) to obtain SUPI1 corresponding to the provided application layer ID1 and SUPI2 corresponding to the provided application layer ID2.

Optionally, the first network equipment (GMLC) calls the Nudm_SDM_Get service operation for the second network equipment (UDM) to obtain authorization information of UE1 and UE2, and calls the Nudm_SDM_Get service operation for UDM to obtain SUPI1 corresponding to the provided application layer ID1 and SUPI2 corresponding to the provided application layer ID2.

In some implementations, if the first network equipment (GMLC) provides the application layer ID to the second network equipment (UDM) to obtain authorization information, the mapped SUPI may be provided to the first network equipment (GMLC) in a Nudm_SDM_get response message. In this case, the Nudm_SDM_Get service operation is called only once.

3. The first network equipment (GMLC) returns a message including SUPI1 and SUPI2 to the third network equipment (AMF).

Optionally, if the check for authorization passes, the first network equipment (GMLC) returns an authorization response including SUPI1 and SUPI2 to the third network equipment (AMF).

4. The third network equipment (AMF) selects a suitable fourth network equipment (LMF) based on the received SUPI1 and/or SUPI2.

5. The third network equipment (AMF) sends a ranging/SL positioning request to the selected fourth network equipment (LMF), in which the request includes SUPI1 and/or SUPI2.

6. The fourth network equipment (LMF) triggers the SL positioning process to locate the measurement between UE/UE1 and UE2.

7. After the ranging/SL positioning process is completed, the fourth network equipment (LMF) returns the measurement result.

8. The third network equipment (AMF) forwards the ranging/SL positioning measurement result to the first network equipment (GMLC).

9. The first network equipment (GMLC) forwards the ranging/SL positioning measurement result to the fifth network equipment (AF/NF).

In various embodiments of the present disclosure, the application layer ID of the terminal may be a GPSI, or another terminal identity provided by the ranging/SL positioning service that can be used to identify the terminal identity, which is not limited herein.

In the embodiments of the present disclosure, UE1 and UE2 may be reference terminals and/or target terminals participating in the ranging service, or may be located terminals and/or target terminals participating in the SL positioning service, or may be client terminals, server terminals, assistance terminals, and the like.

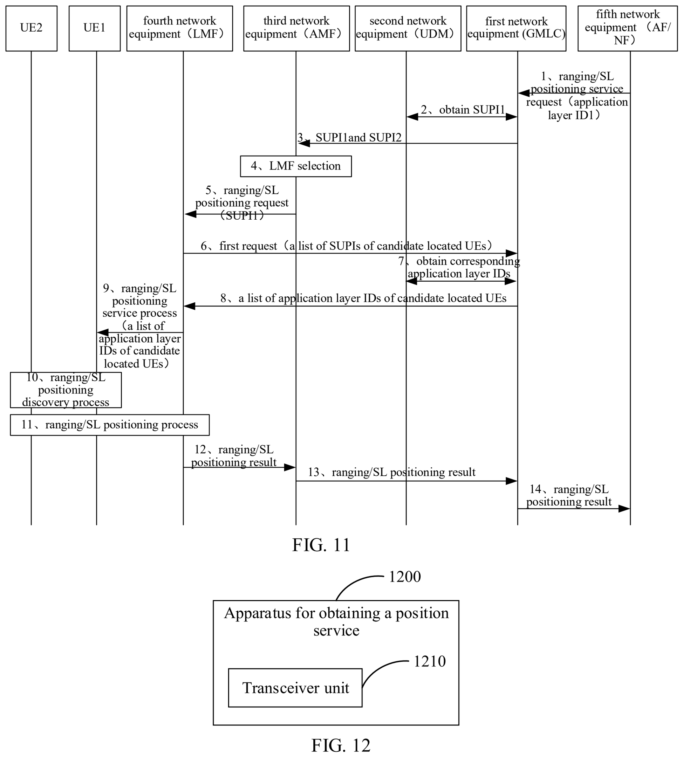

Referring to FIG. 11, FIG. 11 is a flowchart of a method for obtaining a position service provided in an embodiment of the present disclosure. The method can be executed independently or in combination with any other embodiments of the present disclosure. As shown in FIG. 11, the method may include the following steps.

1. The fifth network equipment (AF/NF) sends a ranging/SL positioning service request to the first network equipment (GMLC), in which the request includes application layer ID 1 of UE1 provided by the application.

Optionally, the fifth network equipment may directly send the request to the first network equipment, or may send the request to the first network equipment through a network exposure function (NEF).

In some implementations, the terminal identifier included in the request may also be SUPI1 of UE1. It is understood that in this case, the first network equipment (GMLC) does not need to request the second network equipment (UDM) to provide the SUPI corresponding to the application layer ID (i.e., no ID mapping is required).

2. The first network equipment (GMLC) sends a request to the second network equipment (UDM) to obtain SUPI1 corresponding to the provided application layer ID1.

Optionally, the first network equipment (GMLC) calls the Nudm_SDM_Get service operation for the second network equipment (UDM) to obtain authorization information of UE1, and calls the Nudm_SDM_Get service operation for the UDM to obtain SUPI1 corresponding to the provided application layer ID1.

In some implementations, if the first network equipment (GMLC) provides the application layer ID to the second network equipment (UDM) to obtain authorization information, the mapped SUPI may be provided to the first network equipment (GMLC) in a Nudm_SDM_get response message. In this case, the Nudm_SDM_Get service operation is called only once.

3. The first network equipment (GMLC) returns a message including SUPI1 to the third network equipment (AMF).

Optionally, if the check for authorization passes, the first network equipment (GMLC) returns an authorization response including SUPI1 to the third network equipment (AMF).

4. The third network equipment (AMF) selects a suitable fourth network equipment (LMF) based on the received SUPI1.

5. The third network equipment (AMF) sends a ranging/SL positioning request to the selected fourth network equipment (LMF), in which the request includes SUPI1.

6. In order to assist the target UE (UE1), the fourth network equipment (LMF) may provide a candidate list of located UEs (UE2) to participate in the network-assisted SL positioning of the target UE (UE1). For privacy and security reasons, the fourth network equipment (LMF) cannot send SUPI of the candidate located UE to the target UE (UE1), so the fourth network equipment (LMF) sends a first request to the first network equipment (GMLC), and the first request includes SUPI of each UE in the candidate list of located UEs. The first request is used to request the application layer ID of each candidate located UE.

Optionally, in some implementations, the fourth network equipment (LMF) can first retrieve the application layer ID of each candidate located UE from the locally stored mapping relationship (the mapping relationship between the application layer ID of the terminal and SUPI). If the application layer ID of the candidate located UE is retrieved, there is no need to send the first request to the first network equipment (GMLC); if the application layer ID of the candidate located UE is not retrieved, a first request is sent to the first network equipment (GMLC) to request the application layer ID of each candidate located UE.

7. For the SUPI of each candidate located UE in the first request, the first network equipment (GMLC) may perform a check for authorization of the candidate located UE and obtain the corresponding application layer ID.

Optionally, if the authorization authentication information and/or the associated application layer ID of the candidate located UE is not stored in the first network equipment (GMLC), the first network equipment (GMLC) sends a second request (calling the Nudm_SDM_Get service operation) to the second network equipment (UDM). If relevant information is stored in the first network equipment (GMLC), the first network equipment (GMLC) may directly provide the authorization result and the application layer ID.

8. The first network equipment (GMLC) returns a list of application layer IDs of candidate located UEs.

It can be understood that the first network equipment (GMLC) only provides the application layer ID of the authorized candidate located UE to the fourth network equipment (LMF).

Optionally, the fourth network equipment (LMF) may store the application layer ID associated with the SUPI.

9. The fourth network equipment (LMF) sends the SL positioning service request to UE1, which includes a list of candidate located UEs identified by their application IDs.

10. Based on the received list, UE1 starts the ranging/SL positioning discovery process by broadcasting the application layer ID of the candidate located UE to discover a located UE (UE2).

11. UE1 and UE2 perform the ranging/SL positioning process.

12. After the ranging/SL positioning process, UE1 returns the measurement results/final location information between UE1 and UE2.

13. The fourth network equipment (LMF) sends the location information of UE1 to the third network equipment (AMF).

14. The third network equipment (AMF) forwards the location information of UE1 to the first network equipment (GMLC).

15. The first network equipment (GMLC) forwards the location information of UE1 to the fifth network equipment (AF/NF).

In various embodiments of the present disclosure, the application layer ID of the terminal may be a GPSI, or another terminal identity provided by the ranging/SL positioning service that can be used to identify the terminal identity, which is not limited herein.

In the embodiments of the present disclosure, UE1 may be a target terminal participating in the ranging/SL positioning service, and UE2 may be a located terminal participating in the ranging/SL positioning service.

Corresponding to the method for obtaining a position service provided in the above-mentioned embodiments, the present disclosure also provides an apparatus for obtaining a position service. Since the apparatus for obtaining a position service provided in the embodiments of the present disclosure corresponds to the method provided in the above-mentioned embodiments, the implementations of the method for obtaining a position service are also applicable to the apparatus for obtaining a position service provided in the following embodiments and will not be described in detail in the following embodiments.

Referring to FIG. 12, FIG. 12 is a block diagram of an apparatus for obtaining a position service provided in an embodiment of the present disclosure.

As shown in FIG. 12, the apparatus 1200 includes a transceiver unit 1210.

The transceiver unit is configured to send, based on a first request that is received, a second request to a second network equipment, in which the first request includes at least one first terminal identifier, and the second request is used to request the second network equipment to provide at least one second terminal identifier, in which the at least one second terminal identifier corresponds to the at least one first terminal identifier.

The transceiver unit is configured to receive the at least one second terminal identifier sent by the second network equipment.

The transceiver unit is configured to send the at least one second terminal identifier to a third network equipment and/or a fourth network equipment, in which the at least one second terminal identifier is used for the third network equipment and/or the fourth network equipment to provide a ranging or sidelink (SL) positioning service.

Optionally, the first request is sent by the third network equipment to the first network equipment, and the first request includes at least one first terminal identifier of a terminal participating in the ranging or SL positioning service.

The transceiver unit is configured to:
send the at least one second terminal identifier to the third network equipment, in which the at least one second terminal identifier corresponds to the at least one first terminal identifier, and the at least one second terminal identifier is used for the third network equipment to select the fourth network equipment for providing the ranging or SL positioning service.

Optionally, the at least one second terminal identifier is further used for the third network equipment to send the at least one second terminal identifier to the fourth network equipment.

Optionally, the first terminal identifier is an application layer identity (ID) of a terminal, and the second terminal identifier is a subscription permanent identifier (SUPI) of the terminal.

Optionally, the first request is sent by a fifth network equipment to the first network equipment, and the first request includes at least one first terminal identifier of a terminal participating in the ranging or SL positioning service.

The transceiver unit is configured to:
send the at least one second terminal identifier to the third network equipment, in which the at least one second terminal identifier corresponds to the at least one first terminal identifier, and the at least one second terminal identifier is used for the third network equipment to select the fourth network equipment for providing the ranging or SL positioning service.

Optionally, the at least one second terminal identifier is further used for the third network equipment to send the at least one second terminal identifier to the fourth network equipment.

Optionally, the first terminal identifier is an application layer ID of a terminal, and the second terminal identifier is a SUPI of the terminal.

Optionally, the first request is sent by the fourth network equipment to the first network equipment, and the first request includes the at least one first terminal identifier.

The transceiver unit is configured to:
send the at least one second terminal identifier to the fourth network equipment, in which the at least one second terminal identifier corresponds to the at least one first terminal identifier, and the at least one second terminal identifier is used for the fourth network equipment to provide the ranging or SL positioning service.

Optionally, the first terminal identifier is a SUPI of a terminal, and the second terminal identifier is an application layer ID of the terminal.

Optionally, the first network equipment is a gateway mobile location center (GMLC), the second network equipment is a unified data management (UDM), the third network equipment is an access and mobility management function (AMF), the fourth network equipment is a location management function (LMF), and the fifth network equipment is an application function (AF) or a network function (NF).

The apparatus for obtaining a position service of this embodiment may send the second request to the second network equipment based on the received first request, in which the first request includes the at least one first terminal identifier, the second request is used to request the second network equipment to provide at least one second terminal identifier, the at least one second terminal identifier corresponds to the at least one first terminal identifier; receive the at least one second terminal identifier sent by the second network equipment; and send the at least one second terminal identifier to the third network equipment and/or the fourth network equipment, in which the at least one second terminal identifier is used to provide the ranging or SL positioning service to the third network equipment and/or the fourth network equipment, which can ensure that the gateway mobile location center can obtain the terminal identifier that can be recognized by the network element function, and send the terminal identifier to the corresponding network element function to provide the ranging or SL positioning service.

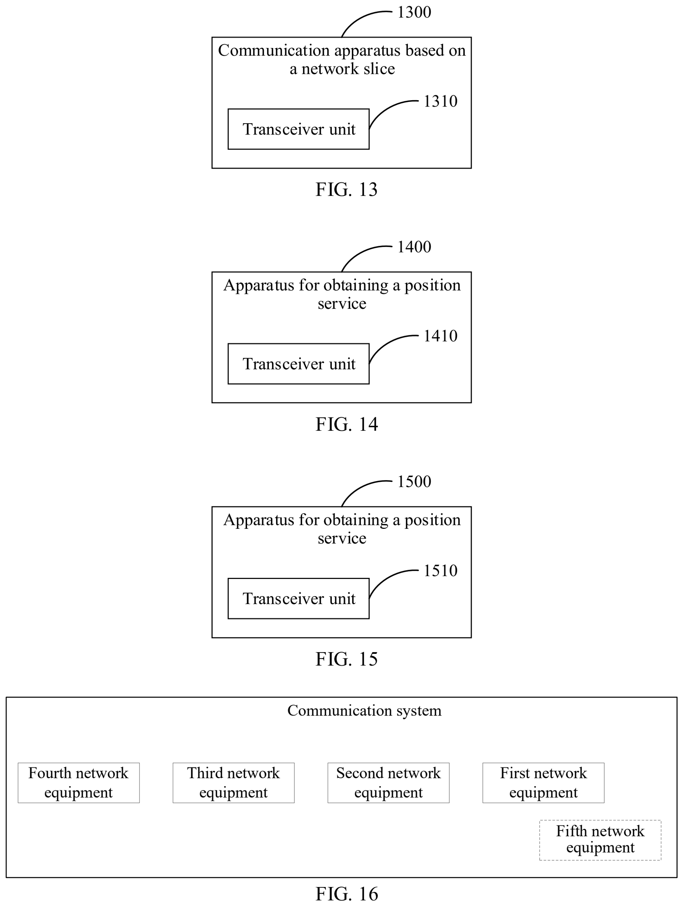

Referring to FIG. 13, FIG. 13 is a block diagram of an apparatus for obtaining a position service provided in an embodiment of the present disclosure.

As shown in FIG. 13, the apparatus 1300 includes a transceiver unit 1310.

The transceiver unit is configured to receive a second request sent by a first network equipment based on a first request that is received, in which the first request includes at least one first terminal identifier, and the second request is used to request the second network equipment to provide at least one second terminal identifier, in which the at least one second terminal identifier corresponds to the at least one first terminal identifier.

The transceiver unit is configured to send the at least one second terminal identifier to the first network equipment, in which the at least one second terminal identifier is used for a third network equipment and/or a fourth network equipment to provide a ranging or sidelink (SL) positioning service.

Optionally, the apparatus further includes:
a processing unit (not shown), configured to determine a second terminal identifier corresponding to each first terminal identifier according to user data stored in the second network equipment.

Optionally, the first terminal identifier is an application layer identity (ID) of a terminal, and the second terminal identifier is a subscription permanent identifier (SUPI) of the terminal; or
the first terminal identifier is a SUPI of a terminal, and the second terminal identifier is an application layer ID of the terminal.

Optionally, the first network equipment is a gateway mobile location center (GMLC), the second network equipment is a unified data management (UDM), the third network equipment is an access and mobility management function (AMF), and the fourth network equipment is a location management function (LMF).

The apparatus for obtaining a position service of this embodiment may receive the second request sent by the first network equipment based on the received first request, in which the first request includes the at least one first terminal identifier, the second request is used to request the second network equipment to provide the at least one second terminal identifier, the at least one second terminal identifier corresponds to the at least one first terminal identifier; and send the at least one second terminal identifier to the first network equipment, in which the at least one second terminal identifier is used for the third network equipment and/or the fourth network equipment to provide the ranging or SL positioning service, which can ensure that the gateway mobile location center can obtain the terminal identifier that can be recognized by the network element function, and send the terminal identifier to the corresponding network element function to provide the ranging or SL positioning service.

Referring to FIG. 14, FIG. 14 is a block diagram of an apparatus for obtaining a position service provided in an embodiment of the present disclosure.

As shown in FIG. 14, the apparatus 1400 includes a transceiver unit 1410.

The transceiver unit is configured to receive at least one second terminal identifier sent by a first network equipment, in which the at least one second terminal identifier is used for the third network equipment to provide a ranging or sidelink (SL) positioning service, the at least one second terminal identifier is obtained by the first network equipment from a second network equipment based on a first request that is received, in which the first request includes at least one first terminal identifier, and the at least one second terminal identifier corresponds to the at least one first terminal identifier.

Optionally, the first request is sent by the third network equipment to the first network equipment, or the first request is sent by a fifth network equipment to the first network equipment;
the first request includes at least one first terminal identifier of a terminal participating in the ranging or SL positioning service.

Optionally, the apparatus further includes:
a processing unit (not shown), configured to select a fourth network equipment according to the at least one second terminal identifier;
in which the transceiver unit is configured to send the at least one second terminal identifier to the fourth network equipment, and the at least one second terminal identifier is used for the fourth network equipment to provide the ranging or SL positioning service.

Optionally, the first terminal identifier is an application layer identity (ID) of a terminal, and the second terminal identifier is a subscription permanent identifier (SUPI) of the terminal.

Optionally, the first network equipment is a gateway mobile location center (GMLC), the second network equipment is a unified data management (UDM), the third network equipment is an access and mobility management function (AMF), the fourth network equipment is a location management function (LMF), and the fifth network equipment is an application function (AF) or a network function (NF).

The apparatus for obtaining a position service of this embodiment may receive at least one second terminal identifier sent by the first network equipment, in which the at least one second terminal identifier is used for the third network equipment to provide the ranging or SL positioning service, the at least one second terminal identifier is obtained by the first network equipment from the second network equipment based on the received first request, and the first request includes the at least one first terminal identifier, and the at least one second terminal identifier corresponds to the at least one first terminal identifier, which can ensure that the gateway mobile location center can obtain the terminal identifier that can be recognized by the network element function, and send the terminal identifier to the corresponding network element function to provide the ranging or SL positioning service.

Referring to FIG. 15, FIG. 15 is a block diagram of an apparatus for obtaining a position service provided in an embodiment of the present disclosure.

As shown in FIG. 15, the apparatus 1500 includes a transceiver unit 1510.

The transceiver unit is configured to receive at least one second terminal identifier sent by a first network equipment, in which the at least one second terminal identifier is used for the fourth network equipment to provide a ranging or sidelink (SL) positioning service, the at least one second terminal identifier is obtained by the first network equipment from a second network equipment based on a received first request, in which the first request includes at least one first terminal identifier, and the at least one second terminal identifier corresponds to the at least one first terminal identifier.

Optionally, the first request is sent by the third network equipment to the first network equipment, or the first request is sent by a fifth network equipment to the first network equipment;
the first request includes at least one first terminal identifier of a terminal participating in the ranging or SL positioning service.

Optionally, the transceiver unit is configured to:
receive the at least one second terminal identifier sent by the first network equipment via a third network equipment, and the fourth network equipment is selected by the third network equipment based on the at least one second terminal identifier.

Optionally, the first terminal identifier is an application layer identity (ID) of a terminal, and the second terminal identifier is a subscription permanent identifier (SUPI) of the terminal.

Optionally, the first request is sent by the fourth network equipment to the first network equipment;
the first request includes at least one first terminal identifier of a terminal participating in the ranging or SL positioning service.

Optionally, the apparatus further includes:
a processing unit (not shown), configured to store a mapping relationship between the at least one first terminal identifier and the at least one second terminal identifier, in which the mapping relationship is used for the fourth network equipment to provide the ranging or SL positioning service.

Optionally, the first terminal identifier is a SUPI of a terminal, and the second terminal identifier is an application layer ID of the terminal.

Optionally, the first network equipment is a gateway mobile location center (GMLC), the second network equipment is a unified data management (UDM), the third network equipment is an access and mobility management function (AMF), the fourth network equipment is a location management function (LMF), and the fifth network equipment is an application function (AF) or a network function (NF).

The apparatus for obtaining a position service of this embodiment may receive at least one second terminal identifier sent by the first network equipment, in which the at least one second terminal identifier is used for the fourth network equipment to provide the ranging or SL positioning service, the at least one second terminal identifier is obtained by the first network equipment from the second network equipment based on the received first request, and the first request includes the at least one first terminal identifier, and the at least one second terminal identifier corresponds to the at least one first terminal identifier, which can ensure that the gateway mobile location center can obtain the terminal identifier that can be recognized by the network element function, and send the terminal identifier to the corresponding network element function to provide the ranging or SL positioning service.

Referring to FIG. 16, FIG. 16 is a block diagram of a communication system according to an embodiment of the present disclosure.

As shown in FIG. 16, the communication system includes: a first network equipment, a second network equipment, a third network equipment, a fourth network equipment and a fifth network equipment.

As a possible implementation, the communication system includes: a first network equipment, a second network equipment, a third network equipment, and a fourth network equipment.

As another possible implementation, the communication system includes: a first network equipment, a second network equipment, a third network equipment, a fourth network equipment and a fifth network equipment.

The first network equipment may receive a first request sent by the third network equipment or the fourth network equipment or the fifth network equipment, the first request including at least one first terminal identifier; and send a second request to the second network equipment based on the first request to request to obtain at least one second terminal identifier, the at least one second terminal identifier corresponding to the at least one first terminal identifier. The first network equipment may send the at least one second terminal identifier to the third network equipment and/or the fourth network equipment, the at least one second terminal identifier is used for the third network equipment and/or the fourth network equipment to provide the ranging/SL positioning service.

In order to implement the above-mentioned embodiments, the embodiments of the present disclosure also propose a communication apparatus, including: a processor and a memory, in which a computer program is stored in the memory, and the processor executes the computer program stored in the memory so that the apparatus performs the method shown in the embodiments of FIG. 2 to FIG. 4, or performs the method shown in the embodiments of FIG. 6 to FIG. 7.

In order to implement the above embodiments, the embodiments of the present disclosure also provide a communication apparatus, including: a processor and a memory, in which the memory stores a computer program, and the processor executes the computer program stored in the memory so that the apparatus performs the method shown in the embodiment of FIG. 5.

In order to implement the above embodiments, the embodiments of the present disclosure also provide a communication apparatus, including: a processor and a memory, in which the memory stores a computer program, and the processor executes the computer program stored in the memory so that the apparatus performs the method shown in the embodiment of FIG. 8.

In order to implement the above-mentioned embodiments, the embodiments of the present disclosure also provide a communication apparatus, including: a processor and an interface circuit, in which the interface circuit is configured to receive code instructions and transmit them to the processor, and the processor is configured to run the code instructions to perform the method shown in the embodiments of FIG. 2 to FIG. 4, or perform the method shown in the embodiments of FIG. 6 to FIG. 7.

In order to implement the above-mentioned embodiments, the embodiments of the present disclosure also provide a communication apparatus, including: a processor and an interface circuit, in which the interface circuit is configured to receive code instructions and transmit them to the processor, and the processor is configured to run the code instructions to perform the method shown in the embodiment of FIG. 5.

In order to implement the above-mentioned embodiments, the embodiments of the present disclosure also provide a communication apparatus, including: a processor and an interface circuit, in which the interface circuit is configured to receive code instructions and transmit them to the processor, and the processor is configured to run the code instructions to perform the method shown in the embodiment of FIG. 8.

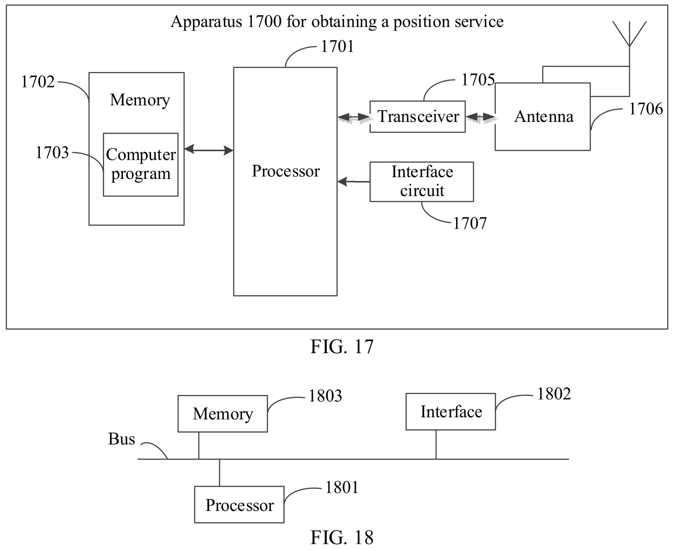

FIG. 17 is a block diagram of an apparatus for obtaining a position service according to an embodiment of the present disclosure. The apparatus 1700 may be a network equipment, or may be a resource owner client or a device running the resource owner client, or may be a chip, a chip system, a processor, etc. that supports the network equipment to implement the method, or may be a chip, a chip system, a processor, etc. that supports the resource owner client to implement the method. The apparatus may be used to implement the method in the above method embodiments. For details, reference may be made to the above method embodiments.

The apparatus 1700 may include one or more processors 1701. The processor 1701 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the apparatus 1700 may also include one or more memories 1702 for storing the computer program 1703. The processor 1701 executes the computer program 1703, to cause the apparatus 1700 to implement the method in the above method embodiments. The computer program 1703 may be fixed in the processor 1701, in which case the processor 1701 may be implemented by hardware.

Optionally, the memory 1702 may also store data. The apparatus 1700 and the memory 1702 may be set up separately or integrated together.

Optionally, the apparatus 1700 may also include a transceiver 1705 and an antenna 1706. The transceiver 1705 may be called a transceiver unit, a transceiver machine, or a transceiver circuit, etc., to implement the receiving and sending function. The transceiver 1705 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the apparatus 1700 may also include one or more interface circuits 1707. The interface circuit 1707 is used to receive code instructions and transmit the code instructions to the processor 1701. The processor 1701 runs the code instructions to cause the communication apparatus 1700 to implement the method in the above method embodiment.

In an implementation, the processor 1701 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In an implementation, the apparatus 1700 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The apparatus in the above embodiments may be a network equipment or a resource owner client or a device running the resource owner client, but the scope of the apparatus in the disclosure is not limited to this, and the structure of the apparatus may not be restricted by FIG. 12- FIG. 14. The apparatus may be an independent device or part of a larger device. For example, the apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network equipment, a cloud device, an artificial intelligence device, etc.;
(6) others.

For the case where the apparatus may be a chip or a chip system, reference may be made to the structural diagram of a chip in FIG. 18. The chip shown in FIG. 18 includes a processor 1801 and an interface 1802. There may be one or more processors 1801, and there may be one or more interfaces 1802.

For the situation that the chip is used to perform the functions of the network equipment in the embodiments of the present disclosure:
the interface 1802 is configured to receive code instructions and transmit the code instructions to the processor;
the processor 1801 is configured to execute the code instructions to perform the method as shown in FIG. 2 to FIG. 4, or the method as shown in FIG. 5, or the method as shown in FIG. 7 to FIG. 7, or the method as shown in FIG. 8.

Optionally, the chip also includes a memory 1803, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a communication system is provided. The communication system includes the apparatus as a network equipment in the foregoing embodiments of FIG. 12 to FIG. 15, or, the communication system includes the apparatus as a network equipment in the foregoing embodiment of FIG. 17.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

It should be understood that the various forms of processes shown above can be used to reorder, add or delete steps. For example, the steps recorded in the embodiments of the present application can be executed in parallel, sequentially or in different orders, as long as the desired results of the technical solution disclosed in the present invention can be achieved, and this document is not limited here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for obtaining a position service, performed by a first network equipment, comprising:
sending, based on a first request that is received, a second request to a second network equipment, wherein the first request comprises at least one first terminal identifier, and the second request is used to request the second network equipment to provide at least one second terminal identifier, wherein the at least one second terminal identifier corresponds to the at least one first terminal identifier;
receiving the at least one second terminal identifier sent by the second network equipment; and
sending the at least one second terminal identifier to a third network equipment and/or a fourth network equipment, wherein the at least one second terminal identifier is used for the third network equipment and/or the fourth network equipment to provide a ranging or sidelink (SL) positioning service.

2. The method of claim 1, wherein the first request is sent by the third network equipment to the first network equipment, and the first request comprises at least one first terminal identifier of a terminal participating in the ranging or SL positioning service;
sending the at least one second terminal identifier to the third network equipment and/or the fourth network equipment comprises:
sending the at least one second terminal identifier to the third network equipment, wherein the at least one second terminal identifier corresponds to the at least one first terminal identifier, and the at least one second terminal identifier is used for the third network equipment to select the fourth network equipment for providing the ranging or SL positioning service.

3. The method of claim 2, wherein the at least one second terminal identifier is further used for the third network equipment to send the at least one second terminal identifier to the fourth network equipment.

4. The method of claim 2 or 3, wherein the at least one first terminal identifie is an application layer identity (ID) of a terminal, and the at least one second terminal identifier is a subscription permanent identifier (SUPI) of the terminal.

5. The method of claim 1, wherein the first request is sent by a fifth network equipment to the first network equipment, and the first request comprises at least one first terminal identifier of a terminal participating in the ranging or SL positioning service;
sending the at least one second terminal identifier to the third network equipment and/or the fourth network equipment comprises:
sending the at least one second terminal identifier to the third network equipment, wherein the at least one second terminal identifier corresponds to the at least one first terminal identifier, and the at least one second terminal identifier is used for the third network equipment to select the fourth network equipment for providing the ranging or SL positioning service.

6. The method of claim 5, wherein the at least one second terminal identifier is further used for the third network equipment to send the at least one second terminal identifier to the fourth network equipment.

7. The method of claim 5 or 6, wherein the at least one first terminal identifier is an application layer ID of a terminal, and the at least one second terminal identifier is a SUPI of the terminal.

8. The method of claim 1, wherein the first request is sent by the fourth network equipment to the first network equipment, and the first request comprises the at least one first terminal identifier;
sending the at least one second terminal identifier to the third network equipment and/or the fourth network equipment comprises:
sending the at least one second terminal identifier to the fourth network equipment, wherein the at least one second terminal identifier corresponds to the at least one first terminal identifier, and the at least one second terminal identifier is used for the fourth network equipment to provide the ranging or SL positioning service.

9. The method of claim 8, wherein the at least one first terminal identifier is a SUPI of a terminal, and the at least one second terminal identifier is an application layer ID of the terminal.

10. The method of any of claims 1-9, wherein the first network equipment is a gateway mobile location center (GMLC), the second network equipment is a unified data management (UDM), the third network equipment is an access and mobility management function (AMF), the fourth network equipment is a location management function (LMF), and a fifth network equipment is an application function (AF) or a network function (NF).

11. A method for obtaining a position service, performed by a second network equipment, comprising:
receiving a second request sent by a first network equipment based on a first request received by the first network equipment, wherein the first request comprises at least one first terminal identifier, and the second request is used to request the second network equipment to provide at least one second terminal identifier, wherein the at least one second terminal identifier corresponds to the at least one first terminal identifier; and
sending the at least one second terminal identifier to the first network equipment, wherein the at least one second terminal identifier is used for a third network equipment and/or a fourth network equipment to provide a ranging or sidelink (SL) positioning service.

12. The method of claim 11, further comprising:
determining a second terminal identifier corresponding to each first terminal identifier according to user data stored in the second network equipment.

13. The method of claim 11 or 12, wherein the at least one first terminal identifier is an application layer identity (ID) of a terminal, and the at least one second terminal identifier is a subscription permanent identifier (SUPI) of the terminal; or
wherein the at least one first terminal identifier is a SUPI of a terminal, and the at least one second terminal identifier is an application layer ID of the terminal.

14. The method of any of claims 11-13, wherein the first network equipment is a gateway mobile location center (GMLC), the second network equipment is a unified data management (UDM), the third network equipment is an access and mobility management function (AMF), and the fourth network equipment is a location management function (LMF).

15. A method for obtaining a position service, performed by a third network equipment, comprising:
receiving at least one second terminal identifier sent by a first network equipment, wherein the at least one second terminal identifier is used for the third network equipment to provide a ranging or sidelink (SL) positioning service, the at least one second terminal identifier is obtained by the first network equipment from a second network equipment based on a first request received by the first network equipment, wherein the first request comprises at least one first terminal identifier, and the at least one second terminal identifier corresponds to the at least one first terminal identifier.

16. The method of claim 15, wherein the first request is sent by the third network equipment to the first network equipment, or the first request is sent by a fifth network equipment to the first network equipment;
the first request comprises at least one first terminal identifier of a terminal participating in the ranging or SL positioning service.

17. The method of claim 15 or 16, further comprising:
selecting a fourth network equipment according to the at least one second terminal identifier; and
sending the at least one second terminal identifier to the fourth network equipment, wherein the at least one second terminal identifier is used for the fourth network equipment to provide the ranging or SL positioning service.

18. The method of any of claims 15-17, wherein the at least one first terminal identifier is an application layer identity (ID) of a terminal, and the at least one second terminal identifier is a subscription permanent identifier (SUPI) of the terminal.

19. The method of any of claims 15-18, wherein the first network equipment is a gateway mobile location center (GMLC), the second network equipment is a unified data management (UDM), the third network equipment is an access and mobility management function (AMF), a fourth network equipment is a location management function (LMF), and a fifth network equipment is an application function (AF) or a network function (NF).

20. A method for obtaining a position service, performed by a fourth network equipment, comprising:
receiving at least one second terminal identifier sent by a first network equipment, wherein the at least one second terminal identifier is used for the fourth network equipment to provide a ranging or sidelink (SL) positioning service, the at least one second terminal identifier is obtained by the first network equipment from a second network equipment based on a first request received by the first network equipment, wherein the first request comprises at least one first terminal identifier, and the at least one second terminal identifier corresponds to the at least one first terminal identifier.

21. The method of claim 20, wherein
the first request is sent by a third network equipment to the first network equipment, or the first request is sent by a fifth network equipment to the first network equipment;
the first request comprises at least one first terminal identifier of a terminal participating in the ranging or SL positioning service.

22. The method of claim 20, wherein receiving the at least one second terminal identifier sent by the first network equipment comprises:
receiving the at least one second terminal identifier sent by the first network equipment via a third network equipment, wherein the fourth network equipment is selected by the third network equipment based on the at least one second terminal identifier.

23. The method of claim 21 or 22, wherein the at least one first terminal identifier is an application layer identity (ID) of a terminal, and the at least one second terminal identifier is a subscription permanent identifier (SUPI) of the terminal.

24. The method of claim 20, wherein
the first request is sent by the fourth network equipment to the first network equipment;
the first request comprises the at least one first terminal identifier of a terminal participating in the ranging or SL positioning service.

25. The method of claim 24, further comprising:
storing a mapping relationship between the at least one first terminal identifier and the at least one second terminal identifier, wherein the mapping relationship is used for the fourth network equipment to provide the ranging or SL positioning service.

26. The method of claim 24 or 25, wherein the at least one first terminal identifier is a SUPI of a terminal, and the at least one second terminal identifier is an application layer ID of the terminal.

27. The method of any of claims 20-26, wherein the first network equipment is a gateway mobile location center (GMLC), the second network equipment is a unified data management (UDM), a third network equipment is an access and mobility management function (AMF), the fourth network equipment is a location management function (LMF), and a fifth network equipment is an application function (AF) or a network function (NF).

28. An apparatus for obtaining a position service, applied in a first network equipment, comprising a transceiver unit, configured to:
send, based on a first request that is received, a second request to a second network equipment, wherein the first request comprises at least one first terminal identifier of, and the second request is used to request the second network equipment to provide at least one second terminal identifier, wherein the at least one second terminal identifier corresponds to the at least one first terminal identifier;
receive the at least one second terminal identifier sent by the second network equipment; and
send the at least one second terminal identifier to a third network equipment and/or a fourth network equipment, wherein the at least one second terminal identifier is used for the third network equipment and/or the fourth network equipment to provide a ranging or sidelink (SL) positioning service.

29. An apparatus for obtaining a position service, applied in a second network equipment, comprising a transceiver unit, configured to:
receive a second request sent by a first network equipment based on a first request received by the first network equipment, wherein the first request comprises at least one first terminal identifier, and the second request is used to request the second network equipment to provide at least one second terminal identifier, wherein the at least one second terminal identifier corresponds to the at least one first terminal identifier; and
send the at least one second terminal identifier to the first network equipment, wherein the at least one second terminal identifier is used for a third network equipment and/or a fourth network equipment to provide a ranging or sidelink (SL) positioning service.

30. An apparatus for obtaining a position service, applied in a third network equipment, comprising a transceiver unit, configured to:
receive at least one second terminal identifier sent by a first network equipment, wherein the at least one second terminal identifier is used for the third network equipment to provide a ranging or sidelink (SL) positioning service, the at least one second terminal identifier is obtained by the first network equipment from a second network equipment based on a first request received by the first network equipment, wherein the first request comprises at least one first terminal identifier, and the at least one second terminal identifier corresponds to the at least one first terminal identifier.

31. An apparatus for obtaining a position service, applied in a fourth network equipment, comprising a transceiver unit, configured to:
receive at least one second terminal identifier sent by a first network equipment, wherein the at least one second terminal identifier is used for the fourth network equipment to provide a ranging or sidelink (SL) positioning service, the at least one second terminal identifier is obtained by the first network equipment from a second network equipment based on a first request received by the first network equipment, wherein the first request comprises at least one first terminal identifier, and the at least one second terminal identifier corresponds to the at least one first terminal identifier.

32. A communication apparatus, comprising a processor and a memory; wherein the memory has a computer program stored thereon, the processor is configured to execute the computer program stored in the memory, to cause the communication apparatus to perform the method of any of claims 1-10, the method of any of claims 11-14, or the method of any of claims 15-19, or the method of any of claims 20-27.

33. A communication apparatus, comprising: a processor and an interface circuit, wherein
the interface circuit is configured to receive code instructions and transmit the code instructions to the processor;
the processor is configured to execute the code instructions to perform the method of any of claims 1-10, the method of any of claims 11-14, or the method of any of claims 15-19, or the method of any of claims 20-27.

34. A computer-readable storage medium having instructions stored thereon, wherein when the instructions are executed, the method of any of claims 1-10, the method of any of claims 11-14, or the method of any of claims 15-19, or the method of any of claims 20-27 is implemented.

35. A communication system, comprising:
a first network equipment, configured to perform the method of any of claims 1-10;
a second network equipment, configured to perform the method of any of claims 11-14;
a third network equipment, configured to perform the method of any of claims 15-19; and
a fourth network equipment, configured to perform the method of any of claims 20-27.
